# FASCICULE DE BREVET EUROPEEN

(11) **EP 3 468 346 B1**
(45) Date de publication et mention de la délivrance du brevet: **26.02.2020**
(21) Numéro de dépôt: 17727919.7
(22) Date de dépôt: 08.06.2017
(51) Int. Cl.: A01G 15/00

(54) **PROCEDE DE SEQUESTRATION DE DIOXYDE DE CARBONE A L'AIDE DE BIOMASSE VEGETALE ET UTILISATION ASSOCIEE**
VERFAHREN ZUR SEQUESTRIERUNG VON KOHLENDIOXID UNTER VERWENDUNG VON PFLANZENBIOMASSE UND ZUGEHÖRIGE VERWENDUNG
METHOD FOR THE SEQUESTRATION OF CARBON DIOXIDE USING PLANT BIOMASS AND ASSOCIATED USE

(30) Priorité: 10.06.2016 FR 1655349
(43) Date de publication de la demande: 17.04.2019
(73) Titulaire: Le Berre, Thomas, 56000 Vannes (FR)
(72) Inventeur: Le Berre, Thomas, 56000 Vannes (FR)
(74) Mandataire: Vidon Brevets & Stratégie
(86) Numéro de dépôt international: PCT/EP2017/064001
(87) Numéro de publication internationale: WO 2017/211976

(56) Documents cités:
- EP-A1- 2 141 980
- US-A- 6 056 919
- Anonymous: "Eichhornia crassipes", From Wikipedia, the free encyclopedia , 7 mai 2015 (2015-05-07), XP002767478, Extrait de l'Internet: URL:https://web.archive.org/web/2015050715 1508/http://en.wikipedia.org/wiki/Eichhorn ia_crassipes [extrait le 2017-02-21]

## Description

### Domaine de l'invention

La présente invention se rapporte au domaine de la séquestration de dioxyde de carbone à l'aide de biomasse végétale.

### Art antérieur

Le dioxyde de carbone est un gaz à effet de serre responsable du réchauffement climatique. Sa concentration dans l'atmosphère a considérablement augmenté du fait de l'utilisation toujours croissante d'énergies fossiles pour les besoins énergétiques de l'humanité.

Les océans représentent le puits de carbone le plus important de la planète en ce qu'ils sont capables d'absorber une quantité importante du dioxyde de carbone de l'atmosphère, en particulier grâce à la dissolution du dioxyde de carbone sous forme d'ions bicarbonates HCO₃⁻ et grâce au développement de phytoplancton et plus généralement de biomasse. Le phytoplancton se développe à la surface des océans à des profondeurs où la lumière du soleil est encore accessible, appelée zone photique, et utilise le dioxyde de carbone pour sa photosynthèse. Il est nécessaire au développement de la biomasse marine étant donné qu'il est le premier chainon de la chaîne alimentaire marine et produit du dioxygène. Un stockage à long terme du carbone se produit notamment quand de la biomasse morte coule au fond des océans. En effet, on estime que le cycle de circulation thermohaline peut prendre 1000 à 1500 ans pour une molécule d'eau.

Cependant, plusieurs phénomènes d'origine anthropomorphique tendent à causer une diminution de l'absorption du dioxyde de carbone de l'atmosphère par les océans. D'une part, l'acidification des océans diminue la solubilité du dioxyde de carbone sous forme d'ions bicarbonates HCO₃⁻. Plus précisément, il a été estimé qu'entre 1751 et 2004, le pH des eaux superficielles des océans est passé d'une valeur moyenne de 8,25 à une valeur moyenne de 8,14. D'autre part, la surexploitation par l'Homme des ressources halieutiques a provoqué l'appauvrissement de la zone photique en nutriments et en phytoplancton.

Différentes techniques de l'art antérieur ont été développées pour séquestrer durablement le dioxyde de carbone par de la biomasse végétale. Le document de brevet américain US 6,056,919 décrit notamment une méthode de fertilisation d'une zone de surface de l'océan par ajout de complexes du fer, voire d'autres substances contenant en particulier de l'azote ou des phosphates, afin de provoquer le développement du phytoplancton et donc l'absorption de carbone par ce phytoplancton et par la biomasse consommant ce phytoplancton. Un inconvénient de cette méthode est la surconcentration des nutriments apportés par la fertilisation sur une zone d'étendue limitée. Un autre inconvénient est que les matières fertilisantes nécessitent a priori la transformation et le conditionnement de certaines matières premières. Par ailleurs, US 2004/0161364 décrit notamment une méthode de séquestration du carbone par suppression de biomasse végétale d'eau douce ou marine sur une zone à traiter en utilisant un herbicide aquatique/algicide. Un inconvénient de cette méthode est que les herbicides aquatiques et algicides sont relativement coûteux et présentent un risque pour l'environnement.

D'autres inconvénients, communs à ces deux méthodes sont, en particulier, une empreinte carbone élevée étant donné la nécessité d'utiliser un bateau et une forte concentration localisée de déchets organiques sur le fond de la zone traitée pouvant avoir un impact néfaste sur les communautés vivant au fond des zones traitées.

### Objectifs de l'invention

L'invention a pour objectif de pallier au moins un des inconvénients ci-dessus énoncés.

Plus précisément un objectif de l'invention est de proposer un procédé de séquestration du dioxyde de carbone permettant la distribution sur une grande étendue des déchets organiques de biomasse au fond des océans.

Un autre objectif de l'invention est de proposer un procédé de séquestration du dioxyde de carbone permettant la distribution de nutriments sur une grande étendue de la zone photique des océans.

Un autre objectif de l'invention est, au moins dans un mode de réalisation, de proposer un procédé de séquestration du carbone permettant la distribution d'oligo-éléments sur une grande étendue de la zone photique des océans.

Un autre objectif de l'invention est de proposer un procédé de séquestration du dioxyde de carbone simple et peu coûteux.

Un autre objectif de l'invention est de proposer un procédé de séquestration du dioxyde de carbone ayant une faible empreinte carbone.

Un autre objectif de l'invention est de proposer un procédé de séquestration du carbone étant respectueux de l'environnement.

Un autre objectif de l'invention est, au moins dans un mode de réalisation, de proposer un procédé de séquestration du carbone permettant de développer/restaurer la biomasse végétale et/ou la biomasse animale océaniques.

### Description de l'invention

L'inventeur a exploité l'idée connue de l'art antérieur de séquestration du dioxyde de carbone en faisant couler de la biomasse au fond d'une mer. L'inventeur a aussi exploité l'idée connue de l'art antérieur de séquestration du dioxyde de carbone par la distribution de nutriments en zone photique pour permettre le développement de phytoplancton et plus généralement de biomasse. Il a combiné de manière tout à fait inattendue plusieurs étapes faisant intervenir des phénomènes naturels et des forces de la nature pour obtenir un procédé de séquestration du carbone ne présentant pas les désavantages de l'art antérieur. L'invention exploite en particulier le phénomène de captage naturel de dioxyde de carbone et autres nutriments par la biomasse végétale. L'invention exploite aussi à bon escient les forces des courants et des vents pour transporter et faire dériver un corps flottant. L'invention exploite enfin le fait que l'eau de mer est toxique pour des espèces végétales d'eau douce. Selon l'invention, une assistance humaine est nécessaire dans au moins une des étapes du procédé revendiqué afin de permettre de provoquer certains phénomènes naturels ou de maîtriser certaines forces de la nature en vue d'un objectif précis ou encore d'en optimiser les effets.

Bien que le procédé selon la présente invention concerne la séquestration du carbone, il peut également être utilisé pour permettre le développement/la restauration de la faune marine et notamment des poissons, mollusques et crustacés. Ce procédé trouve ainsi également des applications dans le domaine de la fertilisation des océans.

### Description détaillée de l'invention

La présente invention a pour objet un procédé de séquestration de dioxyde de carbone selon la revendication 1.

On entend par « macrophyte flottant » une espèce végétale aquatique visible à l'oeil nu, de taille au moins de l'ordre du millimètre, flottant à la surface de l'eau. Si l'espèce végétale a des racines, ces dernières sont libres dans l'eau. Une espèce végétale macrophyte flottant peut donc se déplacer librement à la surface de l'eau en fonction du vent et/ou du courant.

Au sens de l'invention « macrophyte flottant » inclut également certaines espèces végétales aquatiques qui sont normalement qualifiées de « macrophytes à feuilles émergées », c'est à dire normalement capables de s'enraciner dans un substrat et dont les feuilles flottent à la surface de l'eau, mais qui, si elles sont déracinées, continuent de se développer avec des racines libres dans l'eau.

Ladite au moins une espèce végétale macrophyte flottant est choisie parmi *Azolla finiculoides, Ceratopteris cornuta, Ceratopteris pteridoides, Ceratopteris thalictroides, Eichhornia crassipes, Eichhornia azurea, Eichhornia diversifolia, Eichhornia natans, Eichhornia paniculata, Heteranthera dubia, Heteranthera limosa, Heteranthera mexicana, Heteranthera multiflora, Heteranthera penduncularis, Heteranthera rotundifolia, Heteranthera reniformis, Hydrocharis morsus-ranae, Hygroryza aristata, Lemna biloba, Limnobium laevigatum, Limnobium spongia, Myriophyllum aquaticum,* les espèces de nénuphars du genre *Nymphaea, Nuphar lutea, Pistia stratiotes, Pontederia cordata, Ranunculus aquatilis, Salvinia auriculata, Trapa bicornis et Trapa natans.*

On entend par « eau douce » une eau à faible salinité, c'est à dire présentant une concentration en sels comprise typiquement entre 0 et 0.5 gramme par litre d'eau. L'eau douce présente en particulier une faible concentration en sel de chlorure de sodium. Au contraire, l'eau de « mer» est une eau à salinité élevée. Elle présente généralement en surface une concentration en sels, notamment en sel de chlorure de sodium, comprise entre 30 et 40 grammes par litre d'eau. Il existe cependant de grands écarts de salinité en fonction des mers. En effet, la mer Baltique est considérée comme une des mers les moins salées au monde avec une salinité d'environ 5 grammes de sels par litre d'eau alors que la mer Noire est considérée comme une des mers les plus salées au monde avec une salinité d'environ 275 grammes de sels par litre d'eau.

On entend par « assistance humaine » toute action d'un être humain en vue d'un objectif particulier afin de modifier un ordre naturel. Comme il pourra être compris à la lecture de la description détaillée des différentes étapes du procédé selon l'invention, chaque étape pourra, au moins dans un mode de réalisation particulier, nécessiter une assistance humaine. Par ailleurs, dans tous les modes de réalisation de l'invention, au moins une des étapes du procédé selon l'invention nécessite une assistance humaine. L'assistance humaine peut dans certains cas consister en la provocation d'un phénomène naturel qui n'aurait pas eu lieu sans l'action d'un être humain. L'assistance humaine peut dans d'autres cas consister en la maîtrise de forces de la nature en vue d'un objectif précis. L'assistance humaine peut dans encore d'autres cas consister en l'optimisation des effets de phénomènes naturels et/ou de forces de la nature.

L'étape de production d'au moins une espèce végétale macrophyte flottant sur une étendue d'eau douce a pour fonction le captage par ladite au moins une espèce végétale macrophyte flottant du dioxyde de carbone de l'atmosphère ainsi que d'autres nutriments dissouts dans ladite étendue d'eau douce. Des étendues d'eaux douces appropriées pour réaliser la présente invention sont par exemple : une mare, un lac naturel d'eau douce, un lac artificiel d'eau douce, une ramification de rivière où l'eau est douce, des canaux ou une structure spécifique adaptée pour la mise en œuvre de la présente invention. Une structure adaptée pour la mise en œuvre de la présente invention comprend : des bassins de station de traitement d'effluents, des bassins d'aquaculture, des bassins sous serre et des rizières reconverties à cet effet. Selon le cas, l'étendue d'eau douce choisie est naturellement riche en nutriments utiles pour la croissance de ladite au moins une espèce végétale macrophyte flottant.

L'étape de production d'au moins une espèce végétale macrophyte flottant sur une étendue d'eau douce comprend au moins une première étape d'identification d'une étendue d'eau douce appropriée pour la production d'au moins une espèce végétale macrophyte flottant. Selon un mode de réalisation particulier, l'étape d'identification correspond uniquement à une constatation visuelle de ladite étendue d'eau douce. Par exemple, il peut être constaté qu'une étendue d'eau douce présente déjà une espèce végétale macrophyte flottant ou au contraire, il peut être constaté qu'une étendue d'eau douce ne présente aucune espèce végétale macrophyte flottant. Selon un autre mode de réalisation, l'étape d'identification comprend en outre la réalisation de mesures de pH et/ou d'analyse chimique de l'eau prélevée dans ladite étendue d'eau douce.

L'étape de production d'au moins une espèce végétale macrophyte flottant sur une étendue d'eau douce comprend, de manière facultative, une deuxième étape d'introduction d'au moins une espèce végétale macrophyte flottant sur ladite étendue d'eau douce, ladite au moins une espèce végétale macrophyte flottant pouvant être introduite sous forme de graines ou de plants pour les espèces capables de stolonisation. Cette deuxième étape peut notamment être facultative dans le cas où il a été identifié qu'une espèce végétale macrophyte flottant est déjà naturellement présente sur ladite étendue d'eau douce.

L'étape de production d'au moins une espèce végétale macrophyte flottant sur une étendue d'eau douce comprend, de manière facultative, une troisième étape d'addition en nutriments utiles pour la croissance de ladite au moins une espèce végétale macrophyte flottant dans ladite étendue d'eau douce. Ces nutriments comprennent en particulier des éléments de base constitués par l'azote, le phosphore et le potassium, des éléments secondaires constitués par le calcium, le soufre et le magnésium ainsi que des oligo-éléments, tels que le fer, le manganèse, le nickel, le molybdène, le cuivre, le bore, le zinc, le cobalt, le vanadium, le silicium et le sélénium. Les nutriments ajoutés proviennent préférentiellement d'une source de déchets organiques. L'addition de nutriments peut être faite par l'addition de matière végétale, d'eaux usées, de boues d'épurations ou de boues issus de bassins d'aquaculture, ou de toute autre matière riche en nutriments bien connue de l'homme du métier. Cette troisième étape peut notamment être facultative dans le cas d'une étendue d'eau douce initialement riche en nutriments, également qualifiée de eutrophe. Selon l'invention, un échantillonnage et une analyse chimique de l'eau de surface de ladite étendue de mer sont préalablement réalisés afin de déterminer les carences en nutriments de ladite étendue de mer. La teneur en éléments de silicium, de fer, de cadmium, de zinc, de nickel, de cuivre et de sélénium est en particulier mesurée. En fonction des carences constatées, des nutriments correspondants peuvent être ajoutés spécifiquement à ladite étendue d'eau douce au cours de ladite troisième étape d'addition en nutriments.

L'étape de production d'au moins une espèce végétale macrophyte flottant sur une étendue d'eau douce est considérée comme terminée quand les plants de ladite au moins une espèce végétale de macrophyte flottant se sont suffisamment développés pour former un radeau de biomasse végétale. Le suivi de paramètres facilement mesurables comme la taille, la densité et la surface occupée par les plants de ladite au moins une espèce végétale de macrophyte flottant peuvent être utilisés pour caractériser ledit radeau de biomasse végétale. Dans le cas d'espèces normalement qualifiées de « macrophytes à feuilles émergées » et qui seraient enracinées dans le sol du fond de ladite étendue d'eau douce, les feuilles émergées sont alors coupées de leurs racines.

Selon un mode de réalisation préférentiel de l'invention, ladite au moins une espèce végétale macrophyte flottant est choisie dans le groupe constitué par *Eichhornia crassipes* et *Pistia stratiotes. Eichhornia crassipes,* communément appelée jacinthe d'eau, est une espèce végétale originaire des zones tropicales et sub-tropicales. Un plant adulte mesure généralement entre 30 à 80 cm de diamètre. Il comprend en matière sèche : entre 40 et 47% de carbone, environ 4 % d'azote et environ 0.4 % de phosphore. *Eichhornia crassipes* peut se développer conjointement avec d'autres espèces végétales macrophyte flottant, et notamment *Salvinia auriculata, Lemna biloba* et *Azolla finiculoides. Pistia stratiotes,* communément appelée laitue d'eau, est une espèce végétale également originaire des zones tropicales et subtropicales. *Eichhornia crassipes* et *Pistia stratiotes sont* deux espèces végétales sont particulièrement adaptées pour se développer à une température extérieure comprise entre 20 et 30°C et dans une étendue d'eau douce ayant un pH en surface compris entre 4 et 8. Dans les zones climatiques où ces deux espèces ne peuvent pas se développer facilement, ladite étendue d'eau douce est préférentiellement formée de bassins d'eau chauffée, tels des bassins d'eau sous serre ou des bassins d'eau utilisant la chaleur résiduelle de procédés industriels. Parmi les espèces végétales macrophytes flottants, ces deux espèces végétales ont pour avantage de se développer rapidement et sont d'ailleurs considérées comme des espèces invasives. Il est estimé que *Eichhornia crassipes* peut produire entre 40 et 144 tonnes de matière sèche par hectare et par an en formant des radeaux de biomasse ayant une densité allant de 100 g à 400 g de matière sèche par mètre carré. Il est estimé que *Pistia stratiotes* peut produire 70 tonnes de matière sèche par hectare et par an. Ces deux espèces végétales ont également comme avantage d'avoir une très bonne flottabilité et une partie aérienne développée leur donnant une très bonne portance au vent. La matière organique formée avec l'une ou l'autre de ces deux espèces végétales à un pH plutôt basique de valeur environ égale à 9.

En outre, *Eichhornia crassipes* et *Pistia stratiotes* sont deux espèces végétales connues pour être des hyper accumulateurs de métaux et utilisées pour purifier des eaux contenant des métaux lourds. Elles sont notamment capables de capter des quantités importantes de fer, aluminium, magnésium, cuivre, cadmium, plomb, zinc et chrome. Selon un mode de réalisation particulier de l'invention, l'étape de production d'au moins une espèce végétale macrophyte flottant sur une étendue d'eau douce est la production de *Eichhornia crassipes* et de *Pistia stratiotes* sur une étendue d'eau douce polluée avec des métaux lourds, tels que le fer, l'aluminium, le magnésium, le cuivre, le cadmium, le plomb, le zinc et le chrome.

Selon un autre mode de réalisation préférentiel de l'invention, ladite au moins une espèce végétale macrophyte flottant est choisie dans le groupe constitué par *Ranuculus aquatilis* ou *Hydrocharis morsus-ranae. Ranuculus aquatilis,* aussi appelée renoncule aquatique, et *Hydrocharis morsus-ranae,* aussi appelée morène, sont des espèces végétales originaires des régions tempérées. Elles sont particulièrement adaptées pour résister au gel et se développent dans des étendues d'eau douce de pH neutre à basique. L'étape de transport dudit radeau de biomasse végétale depuis ladite étendue d'eau douce vers une mer permet de déplacer ledit radeau de biomasse végétale depuis un habitat adéquat au développement de ladite au moins une espèce végétale macrophyte flottant à un habitat inadéquat au développement de ladite au moins une espèce végétale macrophyte flottant, provoquant la destruction de ses tissus.

Selon un mode de réalisation de l'invention, l'étape de transport dudit radeau de biomasse depuis ladite étendue d'eau douce vers ladite mer comprend un flottage dudit radeau de biomasse le long d'un cours d'eau se jetant dans ladite mer. On entend par « flottage » le transport d'un radeau de matière entraîné par le courant d'un cours d'eau avec une assistance humaine. Ce mode de réalisation est particulièrement adapté quand l'étendue d'eau douce est naturellement connectée audit cours d'eau ou suffisamment proche dudit cours d'eau pour pouvoir envoyer mécaniquement ledit radeau de biomasse végétale dans ledit cours d'eau. Ce mode de réalisation est préféré puisque le transport par flottage a une faible empreinte carbone.

Selon un autre mode de réalisation de l'invention, l'étape de transport dudit radeau de biomasse depuis ladite étendue d'eau douce vers ladite mer comprend un transport par route. Ce mode de réalisation est particulièrement adapté dans le cas où l'étendue d'eau douce est éloignée d'un cours d'eau se jetant dans ladite mer.

L'étape de décomposition et de dispersion dudit radeau de biomasse sur une étendue de ladite mer permet de distribuer des nutriments et de faire couler des déchets organiques sur une grande superficie de mer. Les nutriments ainsi distribués permettent le développement de phytoplancton et plus généralement de biomasse sur une grande superficie de mer contribuant ainsi à l'absorption de dioxyde de carbone par les océans.

Les déchets organiques coulés au fond de la mer permettent une séquestration durable du carbone. La décomposition dudit radeau de biomasse a lieu par la destruction progressive des tissus de ladite au moins une espèce végétale macrophyte flottant par l'eau de mer. La vitesse de décomposition dépend de l'espèce végétale macrophyte flottant et de la salinité de l'eau de mer. Plusieurs jours sont généralement nécessaires pour que ledit radeau de biomasse se disloque et perde peu à peu sa flottabilité. Par exemple, dans le cas d'*Eichhornia crassipes,* le radeau de biomasse reste sensiblement uni et flotte à la surface de la mer pendant une période d'au moins trois jours. La dispersion dudit radeau de biomasse est assurée dans un premier temps par les courants de surface ainsi que par les vents lorsque la matière organique le composant flotte à la surface et dans un deuxième temps par des courants profonds lorsque la matière organique le composant coule peu à peu vers le fond de la mer. Par comparaison, des déchets verts terrestres quelconques qui seraient déversés en mer couleraient rapidement et ne couvriraient ainsi qu'une petite superficie de mer ce qui aboutirait à de véritables décharges de déchets organiques sur les fonds marins. Au contraire, il est estimé qu'avec un vent continu et soutenu et des courants favorables, le radeau de biomasse peut atteindre une vitesse de 1 m/s. Dans ce cas, le radeau de biomasse, qui se désintègre peu à peu, peut parcourir une distance de 250 km avant de couler. En admettant des variations de 5 degrés de part et d'autre de la direction principale du vent, la matière organique du radeau de biomasse est ainsi dispersée sur une surface de 5000 km².

Selon une caractéristique préférentielle de l'invention, l'étape de transport dudit radeau de biomasse depuis ladite étendue d'eau douce vers ladite mer comprend une période de stockage dans une retenue d'eau douce proche de l'embouchure du cours d'eau se jetant dans ladite mer. Cette période de stockage permet d'attendre que certaines conditions (vents, courants, marée, ...) soient réunies pour relâcher ledit radeau de biomasse en mer afin d'optimiser la dispersion dudit radeau de biomasse sur une grande surface de mer, au large des côtes.

Selon l'invention, une étape de simulation de la dispersion dudit radeau de biomasse est réalisée avant l'étape de dispersion et de décomposition dudit radeau de biomasse. La simulation permet de déterminer les meilleures conditions (vents, courants, marée, ...) pour relâcher ledit radeau de biomasse en mer afin d'optimiser la dispersion dudit radeau de biomasse sur une grande surface de mer, au large des côtes. La simulation permet également d'éviter que le radeau de biomasse ne soit ramené sur une côte. Les paramètres pris en compte lors de la simulation sont notamment la géographie du milieu de relâche, les courants, les prévisions météorologiques, la nature des espèces végétales macrophyte flottant formant le radeau de biomasse ainsi que la salinité de l'eau de mer. Selon un mode de réalisation particulier, la simulation est réalisée par ordinateur. Le procédé selon l'invention peut être utilisé pour la dispersion de nutriments à la surface de l'étendue de ladite mer afin de développer/restaurer le phytoplancton et plus généralement la biomasse dans la zone photique de ladite étendue de mer. Le procédé selon l'invention pourra en particulier permettre le développement/la restauration de la faune marine et notamment des poissons, mollusques et crustacés.

Selon l'invention, un échantillonnage et une analyse chimique de l'eau de surface de ladite étendue de mer sont préalablement réalisés afin de déterminer les carences en nutriments de ladite étendue de mer. La teneur en éléments de silicium, de fer, de cadmium, de zinc, de nickel, de cuivre et de sélénium est en particulier mesurée. Des nutriments correspondants sont ajoutés spécifiquement dans ladite étendue d'eau douce au cours de ladite étape de production d'au moins une espèce végétale macrophyte flottant sur une étendue d'eau douce.

Ce procédé peut aussi être utilisé pour l'achat de crédits carbone. En effet la quantité de carbone séquestrée peut être facilement évaluée à partir de la surface et de la densité en matière sèche de ladite au moins une espèce végétale macrophyte flottant dudit radeau de biomasse.

## Revendications

1. Procédé de séquestration de dioxyde de carbone **caractérisé en ce qu'**il comprend :
- une étape de production d'au moins une espèce végétale macrophyte flottant sur une étendue d'eau douce afin de former un radeau de biomasse végétale ;
- une étape de transport dudit radeau de biomasse végétale depuis ladite étendue d'eau douce vers une mer ;
- une étape de dispersion et de décomposition dudit radeau de biomasse végétale sur une étendue de ladite mer ;
l'une au moins desdites étape de production, étape de transport et étape de dispersion et de décomposition étant réalisée sous assistance humaine
**en ce qu'**il comprend préalablement une étape d'échantillonnage et d'analyse chimique de l'eau de surface de ladite étendue de mer,
et **en ce qu'**il comprend une étape de simulation de la dispersion dudit radeau de biomasse végétale avant l'étape de dispersion et de décomposition dudit radeau de biomasse.

2. Procédé de séquestration de dioxyde de carbone selon la revendication 1 **caractérisé en ce que** ladite au moins une espèce végétale macrophyte flottant est choisie dans le groupe constitué par *Azolla finiculoides, Ceratopteris cornuta, Ceratopteris pteridoides, Ceratopteris thalictroides, Eichhornia crassipes, Eichhornia azurea, Eichhornia diversifolia, Eichhornia natans, Eichhornia paniculata, Heteranthera dubia, Heteranthera limosa, Heteranthera mexicana, Heteranthera multiflora, Heteranthera penduncularis, Heteranthera rotundifolia, Heteranthera reniformis, Hydrocharis morsus-ranae, Hygroryza aristata, Lemna biloba, Limnobium laevigatum, Limnobium spongia, Myriophyllum aquaticum,* les espèces de nénuphars du genre *Nymphaea, Nuphar lutea, Pistia stratiotes, Pontederia cordata, Ranunculus aquatilis, Salvinia auriculata, Trapa bicornis, Trapa natans.*

3. Procédé de séquestration de dioxyde de carbone selon la revendication 2 **caractérisé en ce que** ladite au moins une espèce végétale macrophyte flottant est choisie dans le groupe constitué par *Eichhornia crassipes* et *Pistia stratiotes.*

4. Procédé de séquestration de dioxyde de carbone selon la revendication 2 **caractérisé en ce que** ladite au moins une espèce végétale macrophyte flottant est choisie dans le groupe constitué par *Ranunculus aquatilis* et *Hydrocharis morsus-ranae.*

5. Procédé de séquestration de dioxyde de carbone selon l'une des revendications 1 à 4 **caractérisé en ce que** l'étape de transport dudit radeau de biomasse végétale depuis ladite étendue d'eau douce vers ladite mer comprend un flottage dudit radeau de biomasse le long d'un cours d'eau se jetant dans ladite mer.

6. Procédé de séquestration de dioxyde de carbone selon l'une des revendications 1 à 5 **caractérisé en ce que** l'étape de transport dudit radeau de biomasse végétale depuis ladite étendue d'eau douce vers ladite mer comprend une étape de stockage dans une retenue d'eau douce proche de l'embouchure du cours d'eau se jetant dans ladite mer.

7. Utilisation du procédé de séquestration de dioxyde de carbone selon l'une des revendications 1 à 6 pour la dispersion de nutriments à la surface de l'étendue de ladite mer.

8. Utilisation du procédé de séquestration de dioxyde de carbone selon la revendication 7 **caractérisé en ce que** lesdits nutriments sont à base de silicium, de fer, de cadmium, de zinc, de nickel, de cuivre ou de sélénium.

## Patentansprüche

1. Verfahren zur Sequestrierung von Kohlendioxid, **dadurch gekennzeichnet, dass** es Folgendes umfasst:
einen Schritt zur Erzeugung von mindestens einer Makrophyten-Pflanzenspezies, die auf einer Süßwasser-Zone flottiert, so dass ein Pflanzenbiomasse-Floß gebildet wird;
einen Schritt zum Transportieren des Pflanzenbiomasse-Floßes von der Süßwasser-Zone ins Meer;
einen Schritt des Dispergierens und der Zersetzung des Pflanzenbiomasse-Floßes auf einer Meereszone;
wobei zumindest einer von dem Erzeugungsschritt, dem Transportschritt und dem Dispergier- und Zersetzungsschritt unter menschlicher Einwirkung durchgeführt wird,
**gekennzeichnet dadurch, dass** es einen vorherigen Schritt der Probennahme und der chemischen Analyse des Oberflächenwassers der Meereszone umfasst,
und dass es einen Schritt der Simulation des Dispergierens des Pflanzenbiomasse-Floßes vor dem Schritt des Dispergierens und Zersetzens des Biomasse-Floßes umfasst.

2. Verfahren zur Sequestrierung von Kohlendioxid gemäß Anspruch 1, **dadurch gekennzeichnet, dass** die zumindest eine flottierende Makrophyten-Pflanzenspezies ausgewählt ist aus der Gruppe, bestehend aus *Azolla finiculoides, Ceratopteris cornuta, Ceratopteris pteridoides, Ceratopteris thalictroides, Eichhornia crassipes, Eichhornia azurea, Eichhornia diversifolia, Eichhornia natans, Eichhornia paniculata, Heteranthera dubia, Heteranthera limosa, Heteranthera mexicana, Heteranthera multiflora, Heteranthera penduncularis, Heteranthera rotundifolia, Heteranthera reniformis, Hydrocharis morsus-ranae, Hygroryza aristata, Lemna biloba, Limnobium laevigatum, Limnobium spongia, Myriophyllum aquaticum,* Seerosen-Spezies der Gattung *Nymphaea, Nuphar lutea, Pistia stratiotes, Pontederia cordata, Ranunculus aquatilis, Salvinia auriculata, Trapa bicornis, Trapa natans.*

3. Verfahren zur Sequestrierung von Kohlendioxid gemäß Anspruch 2, **dadurch gekennzeichnet, dass** die zumindest eine flottierende Makrophyten-Pflanzenspezies ausgewählt ist aus der Gruppe, bestehend aus *Eichhornia crassipes* und *Pistia stratiotes.*

4. Verfahren zur Sequestrierung von Kohlendioxid gemäß Anspruch 2, **dadurch gekennzeichnet, dass** die zumindest eine flottierende Makrophyten-Pflanzenspezies ausgewählt ist aus der Gruppe, bestehend aus *Ranunculus aquatilis* und *Hydrocharis morsus-ranae.*

5. Verfahren zur Sequestrierung von Kohlendioxid gemäß einem der Ansprüche 1 bis 4, **dadurch gekennzeichnet, dass** der Schritt des Transportierens des Pflanzenbiomasse-Floßes von der Süßwasser-Zone ins Meer ein Flottieren des Biomasse-Floßes entlang eines in das Meer fließenden Wasserlaufs umfasst.

6. Verfahren zur Sequestrierung von Kohlendioxid gemäß einem der Ansprüche 1 bis 5, **dadurch gekennzeichnet, dass** der Schritt des Transportierens des Pflanzenbiomasse-Floßes von der Süßwasser-Zone ins Meer einen Schritt des Speicherns in einem Süßwasser-Reservoir in der Nähe der Mündung des in das Meer fließenden Wasserlaufs umfasst.

7. Verwendung des Verfahrens der Sequestrierung von Kohlendioxid gemäß einem der Ansprüche 1 bis 6 für das Dispergieren von Nährstoffen auf der Oberfläche der Meereszone.

8. Verwendung des Verfahrens zur Sequestrierung von Kohlendioxid gemäß Anspruch 7, **dadurch gekennzeichnet, dass** die besagten Nährstoffe auf Silicium, Eisen, Cadmium, Zink, Nickel, Kupfer oder Selen basieren.

## Claims

1. Method of sequestration of carbon dioxide **characterized in that** it comprises:
- a step of production of at least one macrophyte plant species floating on an expanse of fresh water in order to form a raft of plant biomass;
- a step of transportation of said raft of plant biomass from said expanse of fresh water to a sea;
- a step of dispersal and decomposition of said raft of plant biomass on an expanse of said sea;
at least one of said step of production, said step of transportation and said step of dispersal and decomposition being carried out with human assistance,
**in that** it comprises a preliminary step of sampling and of chemical analysis of the surface water of said expanse of sea,
and in it that it comprises a step of simulation of the dispersal of said raft of biomass which is carried out before the step of dispersal and decomposition of said raft of plant biomass.

2. Method of sequestration of carbon dioxide according to claim 1, **characterized in that** said at least one floating macrophyte plant species is chosen from the group constituted by *Azollafiniculoides, Ceratopteriscornuta, Ceratopterispteridoides, Ceratopteristhalictroides, Eichhorniacrassipes, Eichhorniaazurea, Eichhorniadiversifolia, Eichhornianatans, Eichhorniapaniculata, Heterantheradubia, Heterantheralimosa, Heterantheramexicana, Heterantheramultiflora, Heterantherapenduncularis, Heterantherarotundifolia, Heterantherareniformis, Hydrocharismorsus-ranae, Hygroryzaaristata, Lemnabiloba, Limnobiumlaevigatum, Limnobiumspongia, Myriophyllumaquaticum,* water lily species of the type *Nymphaea, Nupharlutea, Pistiastratiotes, Pontederiacordata, Ranunculusaquatilis, Salvinia auriculata, Trapabicornis* and *Trapanatans.*

3. Method of sequestration of carbon dioxide according to claim 2, **characterized in that** said at least one floating macrophyte plant species is chosen from the group constituted by *Eichhorniacrassipes* and *Pistiastratiotes.*

4. Method of sequestration of carbon dioxide according to claim 2 **characterized in that** said at least one floating macrophyte plant species is chosen from the group constituted by *Ranunculusaquatilis and Hydrocharismorsus-ranae.*

5. Method of sequestration of carbon dioxide according to one of the claims 1 to 4 **characterized in that** the step of transportation of said raft of biomass from said expanse of fresh water to said sea comprises a floating of said raft of plant biomass along a watercourse flowing into said sea.

6. Method of sequestration of carbon dioxide according to one of the claims 1 to 5 **characterized in that** the step of transportation of said raft of plant biomass from said expanse of fresh water to said sea comprises a step of storage in a reservoir of fresh water close to the mouth of the water course flowing into said sea.

7. Use of the method of sequestration of carbon dioxide according to one of the claims 1 to 6 for the dispersal of nutrients on the surface of the expanse of said sea.

8. Use of the method of sequestration of carbon dioxide according to claim 7 **characterized in that** said nutrients are based on silicon, iron, cadmium, zinc, nickel, copper or selenium.
